# EUROPÄISCHE PATENTSCHRIFT

(11) **EP 3 120 505 B1**
(45) Veröffentlichungstag und Bekanntmachung des Hinweises auf die Patenterteilung: **12.12.2018**
(21) Anmeldenummer: 14795558.7
(22) Anmeldetag: 25.10.2014
(51) Int. Cl.: H04L 12/40, H04L 12/66, H04W 84/12, H04L 29/08

(54) **VERNETZUNGSSTEUERGERÄT FÜR EIN KRAFTFAHRZEUG UND KRAFTFAHRZEUG**
INTERCONNECTION CONTROL DEVICE FOR A VEHICLE AND VEHICLE
ÉQUIPEMENT DE CONTRÔLE D'INTERCONNECTION POUR UN VÉHICULE ET VÉHICULE

(30) Priorität: 20.03.2014 DE 102014003949
(43) Veröffentlichungstag der Anmeldung: 25.01.2017
(73) Patentinhaber: Audi AG, 85045 Ingolstadt (DE)
(72) Erfinder: LANGER, Niels-Stefan, 30559 Hannover (DE)
(74) Vertreter: Brandt, Kai
(86) Internationale Anmeldenummer: PCT/EP2014/002881
(87) Internationale Veröffentlichungsnummer: WO 2015/139714

(56) Entgegenhaltungen:
- US-A1- 2005 251 604
- US-A1- 2013 227 648

## Beschreibung

Die Erfindung betrifft ein Vernetzungssteuergerät für ein Kraftfahrzeug, aufweisend eine Anschlusseinrichtung zum Anschluss an mehrere, insbesondere alle, zur Kommunikation zwischen unterschiedlichen Fahrzeugsystemen vorgesehenen Bussysteme des Kraftfahrzeug und eine zur Steuerung des Austauschs von Daten zwischen den Bussystemen ausgebildete Recheneinrichtung. Daneben betrifft die Erfindung ein Kraftfahrzeug.

In modernen Kraftfahrzeugen müssen eine Vielzahl von Daten zwischen unterschiedlichen Fahrzeugsystemen ausgetauscht werden. Um diesen Austausch zu ermöglichen, werden innerhalb des Kraftfahrzeugs Bussysteme eingesetzt, beispielsweise CAN-Busse, LIN-Busse und/oder FlexRay-Busse. Dabei ist meist eine Vielzahl von Bussen vorgesehen, da Bussysteme eine begrenzte Bandbreite und für verschiedene Zwecke besser oder schlechter geeignete Eigenschaften aufweisen, mithin die Menge an Daten, die über ein Bussystem übertragen werden kann, beschränkt ist und sich manche Bussysteme für einige Anwendungen besser eignen als andere Bussysteme. Dokument US 2013/227648 A1 zeigt eine Recheneinheit zum Datenaustausch zwischen Busse in einem Kraftfahrzeug, sowie eine externe Kommunikation mit einem drahtlosen Netzwerk.

Nichtsdestotrotz ist auch der Austausch von Daten zwischen Fahrzeugsystemen, die an unterschiedliche Bussysteme angeschlossen sind, notwendig, so dass auch ein Datenaustausch zwischen Bussystemen benötigt wird. Hierzu ist es bekannt, Vernetzungssteuergeräte vorzusehen, die häufig auch als "Gateway" bezeichnet werden, und mit allen Bussystemen des Kraftfahrzeugs verbunden sind, zwischen denen ein Datenaustausch notwendig werden kann. Eine Recheneinrichtung des Vernetzungssteuergeräts, welches über eine Anschlusseinrichtung an alle diese Bussysteme angeschlossen ist, steuert den Austausch von Daten zwischen den Bussystemen, betreibt also Routing.

Neben diesen internen Kommunikationsmöglichkeiten wird es immer üblicher, Kraftfahrzeuge auch an externe Netze anzubinden, insbesondere an das Internet. Auf diese Weise können nicht nur Komfortfunktionen realisiert werden, sondern auch mit der Führung des Kraftfahrzeugs in unmittelbarer Verbindung stehende, aktuelle Informationen abgerufen werden, beispielsweise was den Straßenzustand, Wetterverhältnisse und dergleichen angeht. Dabei wird die Verbindung in das Internet meist über ein Mobilfunknetz hergestellt.

Um eine solche "Onlineverbindung" zu einem externen Netzwerk zu realisieren, ist es bekannt, ein spezielles Steuergerät vorzusehen, das beispielsweise als "Online Connectivity Unit" (OCU) bezeichnet werden kann. In einem solchen Steuergerät oder an dieses angeschlossen kann auch eine Kommunikationseinrichtung vorliegen, welche beispielsweise als ein Telefonmodul mit einer Antenne und entsprechender Elektronik realisiert sein kann. Derartige Kommunikationsmodule werden häufig auch als "Network Access Device" (NAD) bezeichnet. Eine Verbindung zu anderen Fahrzeugsystemen ausgehend von dem Steuergerät wird über ein Bussystem des Kraftfahrzeugs realisiert, wobei moderne Kraftfahrzeuge häufig mehrere Fahrzeugbusse (Bussysteme) aufweisen. Das Steuergerät weist üblicherweise mithin eine Verbindung zu einem dieser Bussysteme auf, um aus dem Netzwerk empfangene Daten an andere Fahrzeugsysteme übermitteln zu können oder von diesen an das Netzwerk gerichtete Daten zu empfangen und an die Kommunikationseinrichtung weiterzuleiten.

Dabei besteht das Problem, dass die für die OCU verwendete Busanbindung in ihrer Bandbreite begrenzt ist und nicht für breitbandige Daten herangezogen werden kann. Darüber hinaus ist der fahrzeugeigene CAN-Bus bereits stark ausgelastet, wobei alle von der OCU benötigten Daten oder gelieferten Daten hier zusätzlich bereitzustellen wären. Besteht Kommunikationsbedarf zu einem anderen Fahrzeugbus als dem, an den die OCU angeschlossen ist, müssen zwei Fahrzeugbusse aktiv gehalten werden, so dass ein hoher Ruhestrom erforderlich ist.

Der Erfindung liegt daher die Aufgabe zugrunde, eine Möglichkeit zur Verbesserung des Datenaustauschs zwischen einem Kraftfahrzeug und einem externen Netzwerk, insbesondere dem Internet, anzugeben.

Zur Lösung dieser Aufgabe ist bei einem Vernetzungssteuergerät der eingangs genannten Art erfindungsgemäß vorgesehen, dass das Vernetzungssteuergerät zusätzlich wenigstens eine Kommunikationseinrichtung zur drahtlosen Kommunikation in einem wenigstens eine kraftfahrzeugexterne Einrichtung aufweisenden Netzwerk aufweist und die Recheneinrichtung zur Steuerung des Datenaustauschs zwischen den mehreren Bussystemen und dem Netzwerk ausgebildet ist.

Es wird mithin vorgeschlagen, eine bislang getrennt vorgesehene "Online Connectivity Unit" in ein Vernetzungssteuergerät, also ein Gateway, zu integrieren. Auf diese Weise kann jeglicher Datenaustausch an einem einzigen Ort, nämlich in dem Vernetzungssteuergerät, geregelt werden. Das erfindungsgemäße Vernetzungssteuergerät bildet also eine Art zentralen Knotenpunkt. Nachdem eine Anbindung an bevorzugt alle Fahrzeugbusse vorliegt und mithin Daten aus dem Netzwerk unmittelbar auf das Ziel-Bussystem gegeben werden können, ist eine breitbandige Anbindung möglich. Würde ein spezielles, nur an ein einziges Bussystem, beispielsweise einen CAN-Bus, angeschlossenes Steuergerät (OCU) verwendet, müsste der gesamte Verkehr zu dem und von dem externen Netzwerk über dieses eine Bussystem laufen, welches zu stark ausgelastet würde, nachdem die Bussysteme, wie beschrieben wurde, in ihrer Bandbreite begrenzt sind.

Die erfindungsgemäße Ausgestaltung hat den weiteren Vorteil, dass ein besseres Ruhestromverhalten möglich ist, nachdem beim Datenaustausch mit dem Internet unmittelbar der Zielbus angesprochen werden kann, ohne dass weitere Fahrzeugbusse "wach" gehalten werden müssen. Auch ein monetäres Einsparpotential ist gegeben, nachdem bestimmte Hardwarebestandteile nicht mehr benötigt werden.

Die Kommunikationseinrichtung kann dabei eine Sende-/Empfangseinrichtung und/oder eine Antenne aufweisen. Bei der Kommunikationseinrichtung kann es sich bevorzugt um ein Telefonmodul (Mobilfunknetzmodul) handeln, welches häufig auch als Network Access Device - NAD - bezeichnet wird. So wird eine Anbindung an ein Mobilfunknetz sowie gegebenenfalls das Internet über das Mobilfunknetz ermöglicht. Eine Antenne muss nicht zwangsläufig in dem Vernetzungssteuergerät selbst vorgesehen sein, insbesondere, wenn dieses an einem eher abgeschirmten Ort angeordnet ist, worauf im Folgenden noch näher eingegangen werden wird.

Wie bereits dargelegt wurde, kann es sich bei der Kommunikationseinrichtung um eine Schnittstelle zu einem Mobilfunknetz; also ein Telefonmodul, handeln. Es sind jedoch auch andere Kommunikationseinrichtungen denkbar, so dass die Kommunikationseinrichtung (oder gegebenenfalls eine weitere, in das Vernetzungssteuergerät integrierte Kommunikationseinrichtung) eine WLAN-Schnittstelle sein kann. Über WLAN-Netzwerke wird es insbesondere möglich, eine Car2X-Kommunikation zu anderen Kraftfahrzeugen und Infrastruktureinrichtungen aufzubauen, um auch für das Kraftfahrzeug selbst relevante Informationen abzurufen, die bei einem Verbau der entsprechenden Kommunikationseinrichtung in dem Vernetzungssteuergerät unmittelbar an das richtige Bussystem übergeben werden können. Auch bezüglich der WLAN-Konnektivität ist die vorliegende Erfindung mithin äußerst vorteilhaft.

Aufgrund der Integration sind erfindungsgemäß die Kommunikationseinrichtung und die Recheneinrichtung in einem gemeinsamen Gehäuse angeordnet. Dieses ist entsprechend dimensioniert, um zusätzlich zu der Anschlusseinrichtung und der Recheneinrichtung auch die Kommunikationseinrichtung, insbesondere die Sende-/Empfangseinrichtung, aufnehmen zu können.

Zwischen der Kommunikationseinrichtung und der Recheneinrichtung innerhalb des Vernetzungssteuergeräts besteht selbstverständlich eine Kommunikationsverbindung, die erfindungsgemäß als Serial Peripheral Interface-Verbindung (SPI-Verbindung) realisiert ist. Vorzugsweise ist die Kommunikationsverbindung zusätzlich als Universal Serial Bus-Verbindung (USB-Verbindung) realisiert. Damit kann innerhalb des Vernetzungssteuergeräts eine breitbandige Datenweitergabe aus dem Netzwerk oder in das Netzwerk erfolgen, ohne dass diesbezüglich zu starke Beschränkungen in Kauf genommen werden müssen. In besonders zweckmäßiger Ausgestaltung können die Recheneinrichtung und die Kommunikationseinrichtung zur Kommunikation untereinander mittels des TCP/IP-Protokolls ausgebildet sein. Dies bietet sich insbesondere an, wenn über die Kommunikationseinrichtung mittelbar oder unmittelbar eine Verbindung mit dem Internet oder einem WLAN-Netzwerk hergestellt werden soll, da TCP/IP dort ohnehin das Protokoll der Wahl ist und letztendlich gegebenenfalls noch notwendige Formatänderungen oder dergleichen der Daten in der Recheneinrichtung des Vernetzungssteuergeräts erfolgen können.

Neben dem Vernetzungssteuergerät betrifft die vorliegende Erfindung auch ein Kraftfahrzeug mit einem Vernetzungssteuergerät der erfindungsgemäßen Art und den Bussystemen. Selbstverständlich sind in dem Kraftfahrzeug auch die Fahrzeugsysteme vorgesehen, die durch die Bussysteme verbunden werden. Sämtliche Ausführungen bezüglich des Vernetzungssteuergeräts lassen sich analog auf das erfindungsgemäße Kraftfahrzeug übertragen, mit welchem mithin die bereits genannten Vorteile erhalten werden können.

Besondere Beachtung verdient eine zweckmäßige Positionierung des Vernetzungssteuergeräts in dem Kraftfahrzeug. Dabei ist es besonders vorteilhaft, wenn das Vernetzungssteuergerät in einem crashsicheren Bereich, insbesondere einer Fahrgastzelle, und/oder benachbart einer Kabel mehrerer, insbesondere aller, Bussysteme führenden Kabelführungseinrichtung, insbesondere einer Kabeltrasse oder eines Kabelkanals, angeordnet ist. Die Aufrechterhaltung der Kommunikation zwischen den unterschiedlichen Fahrzeugsystemen, auch wenn diese an verschiedenen Fahrzeugbussen (Bussystemen) angeschlossen sind, ist auch im Notfall äußerst wichtig, um bestimmte Fahrzeugsysteme funktionsfähig zu halten. Ein solcher Notfall tritt bei einer Kollision (Crash) des Kraftfahrzeugs mit einem anderen Verkehrsteilnehmer und/oder einem Objekt ein, so dass im Rahmen der vorliegenden Erfindung bevorzugt sichergestellt wird, dass das Vernetzungssteuergerät in einem crashsicheren Bereich angeordnet ist. Aufgrund der Konstruktion moderner Kraftfahrzeuge, bei denen äußere Karosseriebereiche Knautschzonen und dergleichen bilden, liegt ein derartiger crashsicherer Bereich meist im inneren Bereich der Fahrgastzelle, so dass auch das Vernetzungssteuergerät dort angeordnet werden kann.

Ferner ist es zweckmäßig, das Vernetzungssteuergerät einer Kabelführungseinrichtung benachbart vorzusehen, die bevorzugt Kabel aller Bussysteme, an die das Vernetzungssteuergerät angeschlossen ist, führt, so dass keine langen, zusätzlichen Kabelleitungen mehr erforderlich sind. Bei einer solchen Kabelführungseinrichtung kann es sich beispielsweise um eine Kabeltrasse oder einen Kabelkanal handeln, wobei es sich besonders anbietet, wenn das Vernetzungssteuergerät im Bereich einer Kabelquerung im Kraftfahrzeug vorgesehen ist, so dass eine möglichst optimale Anbindung gewährleistet wird. An einer Kabelquerung kreuzen sich letztlich Kabelführungseinrichtungen, so dass das Vernetzungssteuergerät an einem, bevorzugt dem wichtigsten, Knotenpunkt im Kraftfahrzeug angeordnet ist.

Eine weitere vorteilhafte Ausgestaltung der vorliegenden Erfindung sieht vor, dass das Vernetzungssteuergerät wärmeleitend mit einem eine Außenbegrenzung des Kraftfahrzeugs bildenden Karosserieteil verbunden ist. Über eine solche thermische Anbindung an die Fahrzeugkarosserie wird mithin eine Entwärmung und somit Kühlung des Vernetzungssteuergerätes ermöglicht, ohne dass hierfür eine eigene Kühlvorrichtung notwendig wäre. Hierbei sind verschiedene Ausgestaltungen denkbar, beispielsweise, das Gehäuse selbst wenigstens teilweise wärmeleitend zu gestalten und eine Verbindung zu den wärmeerzeugenden Anteilen der Recheneinrichtung und/oder Kommunikationseinrichtung bereitstellen, so dass eine Abführung von Wärme über das Gehäuse an das durch die Fahrtbewegung gekühlte Karosserieteil gegeben ist. Zur Herstellung der wärmeleitenden Verbindungen können gut wärmeleitende Materialien, beispielsweise Kupfer und/oder Aluminium und/oder Wärmeleitpaste, eingesetzt werden.

Weist das Vernetzungssteuergerät als Teil der Kommunikationseinrichtung auch eine Antenne auf, ist es zudem zweckmäßig, den Verbauort des Vernetzungssteuergeräts so zu wählen, dass keine feinmaschigen Metallstrukturen oberhalb des Steuergeräts vorliegen. Somit wird eine diesbezügliche Abschirmung weitgehend vermieden.

Untersuchungen haben ergeben, dass es gerade im Hinblick auf die zuvor angestellten Betrachtungen besonders zweckmäßig ist, wenn das Vernetzungssteuergerät auf einem Mitteltunnel oder unterhalb einer Rücksitzbank des Kraftfahrzeugs verbaut ist. Alternativ ist es auch möglich, das Vernetzungssteuergerät unterhalb eines Fahrersitzes zu verbauen, was jedoch aufgrund des dort in geringerer Menge zur Verfügung stehenden Bauraums weniger bevorzugt wird. Eine Verbauposition auf dem Mitteltunnel oder unterhalb der Rücksitzbank erfüllt die meisten der genannten Kriterien hervorragend, insbesondere die Nähe zu einer Kabelführungseinrichtung oder gar einem zentralen Knotenpunkt von Verkabelungen im Kraftfahrzeug, eine gute Anbindung an die Karosserie und im Fall einer im Steuergerät vorgesehenen Antenne auch eine geringe Abschirmung. Zudem ist dort hinreichender Bauraum vorhanden.

Zur Anordnung einer externen Antenne existieren im Kraftfahrzeug mehrere Möglichkeiten. Häufig ist es vorgesehen, dass das Kraftfahrzeug eine im Bereich oder innerhalb einer Scheibe des Kraftfahrzeugs angeordnete Antenne für das Netzwerk umfasst, die dann entsprechend mit der Kommunikationseinrichtung des Vernetzungssteuergeräts verbunden werden kann.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Vernetzungssteuergeräts,
- Fig. 2: eine Prinzipskizze eines erfindungsgemäßen Kraftfahrzeugs, und
- Fig. 3: die thermische Anbindung eines erfindungsgemäßen Vernetzungssteuergeräts an ein Karosserieteil.

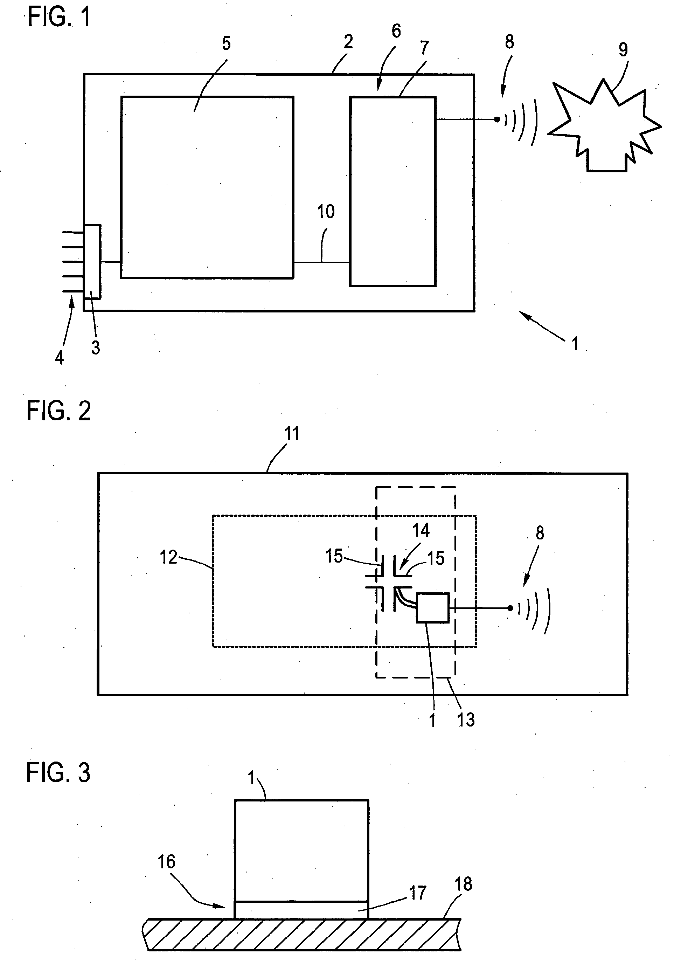

Fig. 1 zeigt eine Prinzipskizze eines erfindungsgemäßen Vernetzungssteuergeräts 1 (Gateway), welches mithin am Gehäuse 2 eine Anschlusseinrichtung 3 an verschiedene Bussysteme 4 des Kraftfahrzeugs, in dem das Vernetzungssteuergerät 1 verbaut ist, aufweist. Die Bussysteme 4 verbinden jeweils mehrere Fahrzeugsysteme miteinander, so dass ein Datenaustausch möglich wird.

Den Datenaustausch zwischen den verschiedenen Bussystemen 4, also das Routing, steuert eine Recheneinrichtung 5, die beispielsweise als ein Mikroprozessor ausgebildet sein kann oder einen solchen aufweisen kann.

Im selben Vernetzungssteuergerät 1, konkret im selben Gehäuse 2, ist vorliegend auch eine Kommunikationseinrichtung 6 vorgesehen, vorliegend ein Telefonmodul 7 (häufig auch als NAD - Network Access Device - bezeichnet). Auf diese Weise kann mittels einer geeigneten Antenne 8, die innerhalb oder außerhalb des Vernetzungssteuergeräts 1 vorgesehen sein kann, über ein Mobilfunknetz eine Verbindung in ein externes Netzwerk 9, hier das Internet, aufgebaut werden. Selbstverständlich kann auf demselben Wege auch eine Verbindung in ein WLAN-Netzwerk über eine entsprechende als WLAN-Schnittstelle ausgebildete Kommunikationseinrichtung 6 hergestellt werden.

Die Recheneinrichtung 5 und die Kommunikationseinrichtung 6 sind vorliegend über eine SPI-Verbindung 10 (alternativ oder zusätzlich auf eine USB-Verbindung) verbunden, über welche der Datenaustausch unter Verwendung von TCP/IP als Protokoll erfolgen kann. Die Recheneinrichtung 5 ist ferner dazu ausgebildet, den Datenaustausch zwischen den Bussystemen 4 und dem Netzwerk 9 zu regeln. Das bedeutet insbesondere, dass Informationen aus dem Netzwerk 9 gleich in den korrekten Fahrzeugbus 4 eingespeist werden können, ohne dass ein weiteres Bussystem 4 als Zwischentransportmittel benötigt würde; umgekehrt können Informationen für das Netzwerk 9 dem entsprechenden Bussystem 4 direkt entnommen und an das Netzwerk 9 weitergeleitet werden. Das Vernetzungssteuergerät 1 bildet somit einen zentralen Knotenpunkt für die Kommunikation innerhalb des Kraftfahrzeugs sowie die Kommunikation zu dem wenigstens einen Netzwerk 9 außerhalb des Kraftfahrzeugs. Mithin kann ein solches Vernetzungssteuergerät 1 auch als "Connected Gateway" bezeichnet werden.

Fig. 2 zeigt eine Prinzipskizze eines erfindungsgemäßen Kraftfahrzeugs 11, welches im Bereich des Innenraums, in dem sich die Fahrzeuginsassen aufhalten, einen crashsichereri Bereich 12 aufweist. In diesem crashsicheren Bereich 12 ist unterhalb einer Rückbank 13 des Kraftfahrzeugs 11 das Vernetzungssteuergerät 1 verbaut. Dabei ist es nah einer Kabelquerung 14 von zwei Kabel der Bussysteme 4 enthaltenden Kabeltrassen 15 als Kabelführungseinrichtungen angeordnet, so dass das Vernetzungssteuergerät 1 auf kurzem Weg mit allen Bussystemen 4, die hier in ihrer vollständigen Verkabelung nicht näher gezeigt sind, verbunden werden kann. Der Übersichtlichkeit halber sind auch die weiteren Fahrzeugsysteme, die durch die Bussysteme 4 verbunden werden, nicht genauer dargestellt.

Eine nicht im Vernetzungssteuergerät 1 verbaute Antenne 8 ist vorliegend im Bereich einer Frontscheibe, insbesondere in diese integriert oder an der Scheibenwurzel, vorgesehen und mit dem Vernetzungssteuergerät 1 verbunden.

Fig. 3 zeigt ferner, dass das Vernetzungssteuergerät 1 über ein Verbindungsmittel 16, welches hier als Kupferplatte 17 ausgebildet ist, mit einem nach außen liegenden Karosserieteil 18 des Kraftfahrzeugs 1 verbunden ist. Auf diese Weise kann eine Entwärmung des Vernetzungssteuergeräts 1 stattfinden, wobei zweckmäßigerweise eine gute wärmeleitende Verbindung auch durch die Verwendung von Wärmeleitpaste hergestellt wird.

Entsprechende wärmeabführende Verbindungen sind selbstverständlich auch innerhalb des Vernetzungssteuergeräts 1 vorgesehen, jedoch der Übersichtlichkeit halber nicht näher dargestellt. Insbesondere ist der an das Verbindungsmittel 16 angrenzende Bereich des Gehäuses wärmeleitend ausgebildet und nach innen beispielsweise mit Wärmeübertragern verbunden, die die Wärme von entsprechenden Teilen der Recheneinrichtung 5 und/oder der Kommunikationseinrichtung 6 aufnehmen.

## Patentansprüche

1. Vernetzungssteuergerät (1) für ein Kraftfahrzeug (11), aufweisend eine Anschlusseinrichtung (3) zum Anschluss an alle zur Kommunikation zwischen unterschiedlichen Fahrzeugsystemen vorgesehenen Bussysteme (4) des Kraftfahrzeugs (11) und eine zur Steuerung des Austauschs von Daten zwischen den Bussystemen (4) ausgebildete Recheneinrichtung (5),
**dadurch gekennzeichnet,**
**dass** das Vernetzungssteuergerät (1) zusätzlich wenigstens eine Kommunikationseinrichtung (6) zur drahtlosen Kommunikation in einem wenigstens eine kraftfahrzeugexterne Einrichtung aufweisenden Netzwerk (9) aufweist und die Recheneinrichtung (5) zur Steuerung des Datenaustauschs zwischen den mehreren Bussystemen (4) und dem Netzwerk (9) ausgebildet ist, wobei die Kommunikationseinrichtung (6) und die Recheneinrichtung (5) in einem gemeinsamen Gehäuse (2) angeordnet sind, wobei die Kommunikationseinrichtung (6) und die Recheneinrichtung (5) ausgebildet sind, über eine Serial Peripheral Interface-Verbindung (10) zu kommunizieren.

2. Vernetzungssteuergerät nach Anspruch 1,
wobei die Kommunikationseinrichtung (6) eine Sende-/Empfangseinrichtung und/oder eine Antenne (8) aufweist.

3. Vernetzungssteuergerät nach Anspruch 1 oder 2,
wobei die Kommunikationseinrichtung (6) eine WLAN-Schnittstelle und/oder eine Schnittstelle zu einem Mobilfunknetz ist.

4. Vernetzungssteuergerät nach einem der vorangehenden Ansprüche, wobei die Kommunikationseinrichtung (6) und die Recheneinrichtung (5) ausgebildet sind, zusätzlich über eine USB-Verbindung zu kommunizieren.

5. Vernetzungssteuergerät nach Anspruch 4,
wobei die Recheneinrichtung (5) und die Kommunikationseinrichtung (6) zur Kommunikation untereinander mittels des TCP/IP-Protokolls ausgebildet sind.

6. Kraftfahrzeug (11) mit einem Vernetzungssteuergerät (1) nach einem der vorangehenden Ansprüche und den Bussystemen (4).

7. Kraftfahrzeug nach Anspruch 6,
wobei das Vernetzungssteuergerät (1) in einem crashsicheren Bereich und/oder benachbart einer Kabel mehrerer Bussysteme (4) führenden Kabelführungseinrichtung (15) angeordnet ist.

8. Kraftfahrzeug nach Anspruch 6 oder 7,
wobei das Vernetzungssteuergerät (1) unterhalb eines Fahrersitzes oder unterhalb einer Rücksitzbank (13) verbaut ist.

9. Kraftfahrzeug nach einem der Ansprüche 6 bis 8,
wobei das Vernetzungssteuergerät (1) wärmeleitend mit einem eine Außenbegrenzung des Kraftfahrzeugs (11) bildenden Karosserieteil (18) verbunden ist.

10. Kraftfahrzeug nach einem der Ansprüche 6 bis 9,
wobei es eine im Bereich oder innerhalb einer Scheibe des Kraftfahrzeugs (11) angeordnete Antenne (8) für das Netzwerk (9) umfasst, die mit der Kommunikationseinrichtung (6) des Vernetzungssteuergeräts (1) verbunden ist.

## Claims

1. Interconnection control device (1) for a vehicle (11), having a connection device (3) for connecting to all bus systems (4) of the vehicle (11) provided for communicating between different vehicle systems and a computer device (5) designed for controlling the exchange of data between the bus systems (4),
**characterised in that**
the interconnection control device (1) additionally has at least one communication device (6) for wireless communication in a network (9) having at least one device that is external to the vehicle and the computer device (5) is designed for controlling the data exchange between the plurality of bus systems (4) and the network (9), wherein the communication device (6) and the computer device (5) are arranged in a common housing (2), wherein the communication device (6) and the computer device (5) are designed to communicate via a serial peripheral interface connection (10).

2. Interconnection control device according to claim 1,
wherein
the communication device (6) has a transmitter/receiver and/or an antenna (8).

3. Interconnection control device according to claim 1 or 2,
wherein
the communication device (6) is a WLAN interface and/or an interface to a mobile network.

4. Interconnection control device according to any of the preceding claims,
wherein
the communication device (6) and the computer device (5) are designed to communicate additionally by means of an USB connection.

5. Interconnection control device according to claim 4,
wherein
the computer device (5) and the communication device (6) are designed for communicating with one another by means of the TCP/IP protocol.

6. Vehicle (11) with an interconnection control device (1) according to any of the preceding claims and the bus systems (4).

7. Vehicle according to claim 6,
wherein
the interconnection control device (1) is arranged in a crash-safe area and/or adjacent to a cable guiding device (15) for guiding the cables of a plurality of bus systems (4).

8. Vehicle according to claim 6 or 7,
wherein
the interconnection control device (1) is installed underneath a driver's seat or underneath a back seat (13).

9. Vehicle according to any of claims 6 to 8,
wherein
the interconnection control device (1) is connected in a thermally conductive manner to a body part (18) forming an external perimeter of the vehicle (11).

10. Vehicle according to any of claims 6 to 9,
wherein
it comprises an antenna (8) for the network (9) arranged in the area of or inside a window of the vehicle (11), which antenna is connected to the communication device (6) of the interconnection control device (1).

## Revendications

1. Unité de commande de mise en réseau (1) pour un véhicule à moteur (11), comprenant un dispositif de connexion (3) pour la connexion à l'ensemble des systèmes de bus (4) du véhicule à moteur (11) destinés à une communication entre les différents systèmes de véhicule à moteur, et un dispositif de calcul (5) conçu pour commander l'échange de données entre les systèmes de bus (4),
**caractérisée en ce que**,
l'unité de commande de mise en réseau (1) comprend en outre au moins un dispositif de communication (6) pour une communication sans fil dans un au moins un réseau (9) présentant au moins un dispositif de véhicule à moteur externe, et le dispositif de calcul (5) est formé pour commander l'échange de données entre les plusieurs systèmes de bus (4) et le réseau (9), dans lequel le dispositif de communication (6) et le dispositif de calcul (5) sont agencés dans un boîtier commun (2), dans lequel le dispositif de communication (6) et le dispositif de calcul (5) sont formés pour communiquer via une connexion-interface périphérique série (10).

2. Unité de commande de mise en réseau selon la revendication 1, dans laquelle
le dispositif de communication (6) comporte un dispositif d'émission/réception et/ou une antenne (8).

3. Unité de commande de mise en réseau selon la revendication 1 ou 2, dans laquelle
le dispositif de communication (6) est une interface WLAN et/ou une interface avec un réseau radio mobile.

4. Unité de commande de mise en réseau selon l'une des revendications précédentes, dans laquelle
le dispositif de communication (6) et le dispositif de calcul (5) sont conçus pour communiquer en outre via une connexion USB.

5. Unité de commande de mise en réseau selon la revendication 4, dans laquelle
le dispositif de calcul (5) et le dispositif de communication (6) sont conçus pour communiquer entre eux au moyen du protocole TCP/IP.

6. Véhicule à moteur (11) avec une unité de commande de mise en réseau (1) selon l'une des revendications précédentes et les systèmes de bus (4).

7. Véhicule à moteur selon la revendication 6, dans lequel
l'unité de commande de mise en réseau (1) est agencée dans une zone fiable en cas de collision et/ou au voisinage d'un dispositif de guidage de câble (15) guidant un câble de plusieurs systèmes de bus (4).

8. Véhicule à moteur selon la revendication 6 ou 7, dans lequel
l'unité de commande de mise en réseau (1) est installée sous le siège conducteur ou sous un siège arrière (13).

9. Véhicule à moteur selon l'une des revendications 6 à 8, dans lequel
l'unité de commande de mise en réseau (1) est reliée en conduction thermique à une pièce de carrosserie (18) formant une limite extérieure du véhicule à moteur (11).

10. Véhicule à moteur selon l'une des revendications 6 à 9, **caractérisé en ce qu'**il comprend une antenne (8) pour le réseau (9) agencée dans la zone ou dans une vitre du véhicule à moteur (11), qui est reliée au dispositif de communication (6) de l'unité de commande de mise en réseau (1).
